Europäisches Patentamt

European Patent Office

Office européen des brevets

(19)

(11) Numéro de publication : **0 162 773**
**B1**

(12) **FASCICULE DE BREVET EUROPÉEN**

(45) Date de publication du fascicule du brevet :
27.07.88

(51) Int. Cl.⁴ : **B 64 C 27/72**

(21) Numéro de dépôt : **85400903.2**

(22) Date de dépôt : **09.05.85**

(54) Dispositif à plateaux cycliques montés sur articulations lamifiées pour la commande du pas des pales d'un rotor.

(30) Priorité : **14.05.84 FR 8407421**

(43) Date de publication de la demande :
**27.11.85 Bulletin 85/48**

(45) Mention de la délivrance du brevet :
**27.07.88 Bulletin 88/30**

(84) Etats contractants désignés :
**DE GB IT**

(56) Documents cités :
**FR-A- 1 054 268**
**FR-A- 2 450 201**

(73) Titulaire : **AEROSPATIALE Société Nationale Industrielle**
**37, Boulevard de Montmorency**
**F-75781 Paris Cédex 16 (FR)**

(72) Inventeur : **Leman, Jean-Luc**
**Le Bel Ormeau - Bât. C 3 Avenue J.P. Coste**
**F-13100 Aix en Provence (FR)**
Inventeur : **Russier, Michel Victor**
**26, Rue Gustave Desplaces**
**F-13100 Aix en Provence (FR)**
Inventeur : **Suzzi, Robert Jean**
**121, Rue Saint Pierre**
**F-13005 Marseille (FR)**

(74) Mandataire : **Lepeudry-Gautherat, Thérèse et al**
**ARMENGAUD JEUNE CABINET LEPEUDRY 6, rue du**
**Fg. St-Honoré**
**F-75008 Paris (FR)**

## Description

La présente invention concerne les dispositifs de commande du pas des pales de rotors, et elle se rapporte en particulier à un dispositif à plateaux cycliques destinés à commander le pas collectif, ou général, et le pas cyclique des pales d'un rotor de giravion. PLus précisément, l'invention a pour objet un dispositif de ce type dans lequel les plateaux cycliques, notamment, sont réalisés et montés selon une disposition particulière d'articulation et de coulissement vis-à-vis de l'arbre d'un rotor sustentateur ou principal d'hélicoptère, afin de commander les pas collectif et cyclique des pales de ce rotor.

Il est bien connu que les variations de la force de sustentation délivrée par un rotor principal de giravion sont obtenues en faisant varier simultanément et dans le même sens l'incidence de toutes les pales de ce rotor (commande du pas collectif), et que le pilotage d'un giravion, dont l'arbre de chaque rotor de sustentation est maintenu en position fixe sur la structure du giravion, est assuré en faisant varier cycliquement le pas des pales (commande du pas cyclique).

Afin de transmettre les ordres de commande du pas collectif et du pas cyclique aux pales d'un rotor, il a déjà été proposé d'utiliser des dispositifs comprenant deux plateaux annulaires assemblés par au moins un roulement à billes et montés concentriques autour de l'arbre du rotor, et dont l'un est un plateau non tournant, immobilisé en rotation par au moins un organe de liaison inférieur fixé à au moins un carter rigidement lié à la structure du giravion, et monté d'une part déplaçable le long de l'arbre du rotor et d'autre part oscillant par rapport à l'arbre du rotor par l'intermédiaire d'un mécanisme d'articulation, tandis que l'autre est un plateau tournant entraîné en rotation avec l'arbre du rotor par au moins un organe de liaison supérieur fixé à l'arbre et/ou au moyen du rotor, et relié au levier de commande du pas de chacune des pales du rotor par une bielle de pas, le plateau non-tournant étant sollicité par des organes de commande du pas collectif, qui commandent ses déplacements le long de l'arbre, ainsi que par des organes de commande du pas cyclique, qui commandent ses oscillations par rapport à l'arbre, de sorte que le plateau tournant, qui suit les mouvements du plateau non-tournant, transmet ces mouvements aux leviers de commande de pas par l'intermédiaire des bielles de pas.

Ainsi, une commande de pas collectif est obtenue par une translation axiale d'ensemble des plateaux, obtenue par glissement axial, le long de l'arbre du rotor, du mécanisme d'articulation, et une commande de pas cyclique est obtenue par une inclinaison d'ensemble des plateaux par rapport à l'axe de l'arbre du rotor, grâce au mécanisme d'articulation.

Par le brevet français n° 1 049 106 et son certificat d'addition n° 63 478, on connaît un dispositif du type précité dans lequel le plateau tournant est en position radiale externe par rapport à un unique roulement à billes de liaison des deux plateaux, et présente la forme d'une étoile, qui comporte autant de branches que le rotor comporte de pales, et qui est entraînée en rotation par un compas tournant, constituant l'organe de liaison supérieur, et articulé par son extrémité supérieure sur le moyeu. Ce plateau en étoile est monté tournant sur le plateau non-tournant, en position radiale interne et articulé par rapport à l'arbre par un joint universel, de façon à s'incliner dans toutes les directions de l'espace sous l'action de deux bras en V qui constituent les organes de commande du pas cyclique. Les organes de commande du pas collectif et les organes de liaison inférieurs sont constitués par un mécanisme commun, comportant une fourche à deux bras articulés sur le plateau non-tournant autour d'un axe diamétral de l'arbre, et un boîtier dans lequel est montée tourillonnante, autour d'un axe perpendiculaire à l'axe d'articulation des bras de la fourche, afin de réaliser le joint universel, la queue de la fourche, ce boîtier étant relié à un support solidaire du carter de l'arbre du rotor par une paire de bielles latérales, et à une pièce triangulaire, elle-même articulée d'autre part sur le support, et enfin par une rotule à une biellette de commande du pas collectif.

On connaît également un dispositif analogue, dans lequel le mécanisme d'articulation est une rotule sur laquelle le plateau non-tournant est monté oscillant, et elle-même montée coulissante axialement autour d'un guide-plateaux entourant coaxialement l'arbre du rotor et fixé à un carter solidaire de la structure du giravion, l'organe de liaison supérieur étant un compas dont l'extrémité supérieure est solidaire de l'arbre, l'organe de liaison inférieur étant également un compas dont l'extrémité inférieure est solidaire du carter, et les organes de commande étant des servocommandes.

Ces deux réalisations ont pour inconvénient commun qu'afin d'assurer un positionnement radial convenable des plateaux, il est nécessaire de monter les pièces constitutives avec de très faibles jeux. Ces mécanismes nécessitent une bonne lubrification des pièces à frottement. Mais en dépit de cette précaution, des usures peuvent apparaître après un certain temps de service, qui augmentent les jeux et peuvent nuire au bon fonctionnement des organes de commande. En particulier dans la seconde réalisation présentée ci-dessus, l'ajustement précis entre les portées coopérantes de la rotule et du plateau non-tournant ainsi qu'entre la rotule et le guide-plateaux est à l'origine de frottements importants, générateurs d'usure dans le montage coulissant de la rotule et entre cette dernière et le plateau qu'elle porte, de sorte que les risques d'apparition de jeux, à l'origine de vibrations ou de coincements des commandes, sont élevés. Il est donc nécessaire d'effectuer de fréquentes révisions.

Par ailleurs, il faut noter que la première réalisation connue présentée ci-dessus est relativement complexe et nécessite un nombre élevé d'organes.

Afin de remédier à ces inconvénients, il a été proposé par le brevet français n° 2 119 828 que le plateau tournant soit un plateau intérieur, porté par l'arbre du rotor par l'intermédiaire d'un joint comportant une bague intérieure, en forme générale de zone équatoriale sphérique, solidaire de l'arbre, et une bague extérieure, de forme générale interne cylindrique, solidaire du plateau intérieur, ces bagues étant distantes l'une de l'autre et présentant un certain nombre de rainures axiales, régulièrement réparties et en regard, qui emprisonnent, dans chaque paire de rainures en regard, une bille, une cage disposée dans l'intervalle entre les bagues maintenant l'ensemble des billes en position, tandis que le plateau non-tournant est un plateau extérieur, ayant essentiellement la forme d'un anneau cylindrique porté, par l'intermédiaire de deux roulements, par un bord tombé cylindrique du plateau intérieur, et ce dernier est renforcé par un tore tubulaire débordant radialement vers l'extérieur et supportant les articulations des bielles de pas.

Cependant, cette troisième réalisation connue présente deux inconvénients en commun avec les deux autres réalisations de l'état de la technique, puisque, dans les trois cas, les pièces du mécanisme d'articulation du plateau intérieur par rapport à l'arbre sont sollicitées dynamiquement en fonctionnement et fortement chargées; et qu'en raison de la structure annulaire d'un nombre important de pièces, il est nécessaire, pour changer ne serait-ce que l'une de ces pièces, de démonter le noyau du rotor et éventuellement de déposer l'arbre, ce qui, dans certains montages de ce dernier, entraîne également la dépose du porte-satellites de la boîte de transmission principale qui assure l'entraînement en rotation de l'arbre du rotor. Ceci a pour conséquences d'augmenter dans des proportions considérables la durée et le coût des travaux de maintenance.

On connaît également par FR - A - 1 054 268, un dispositif de commande du pas collectif et du pas cyclique des pales d'un rotor de giravion, du type comprenant deux plateaux annulaires destinés à être assemblés par au moins un roulement à billes et montés concentriques autour de l'arbre du rotor, et dont l'un est un plateau non tournant, immobilisé en rotation par au moins un organe de liaison inférieur fixé à au moins un carter rigidement lié à la structure du giravion, et monté, d'une part, déplaçable le long de l'arbre du rotor, et, d'autre part, oscillant par rapport à l'arbre du rotor par l'intermédiaire d'un mécanisme d'articulation, tandis que l'autre est un plateau tournant destiné à être entraîné en rotation avec l'arbre du rotor par au moins un organe de liaison supérieur fixé à l'arbre et/ou au moyen du rotor et relié au levier de commande du pas de chacune des pales du rotor par une bielle de pas, le plateau non tournant étant sollicité par des organes de commande du pas collectif qui commandent ses déplacements le long de l'arbre ainsi que par des organes de commande du pas cyclique, qui commandent ses oscillations par rapport à l'arbre, lesdites oscillations étant autorisées par déformation en cisaillement dans le mécanisme d'articulation d'un matériau élastique monté entre une armature interne en forme de bague et une armature externe circulaire, qui est assemblée à la bague interne du ou des roulements à billes reliant les deux plateaux, de sorte que le plateau tournant qui suit les mouvements du plateau non tournant transmet ces mouvements aux leviers de commande de pas par l'intermédiaire des bielles de pas.

Par ailleurs, on connaît par EP-A- 0 055 660, une butée déformable lamifiée de forme courbe, notamment pour rotor d'hélicoptère, et constituée d'un empilement alterné de coupelles rigides et de couches d'un matériau élastique.

Par la présente invention, on se propose de remédier aux inconvénients mentionnés ci-dessus, et le problème à la base de l'invention est d'obtenir un mécanisme d'articulation des plateaux par rapport à l'arbre qui autorise les débattements angulaires demandés aux plateaux cycliques en assurant un centrage énergique des plateaux, les pièces du mécanisme étant peu sollicitées afin d'augmenter leur longévité et de diminuer la fréquence des interventions de maintenance. Un autre but de l'invention est d'obtenir que pratiquement toutes les pièces susceptibles d'usure du dispositif de commande des pas collectif et cyclique des pales puissent être changées individuellement sans démontage du mât rotor. Un autre but encore de l'invention est de supprimer les risques de coincement de la commande. Enfin un dernier but de l'invention est de supprimer toute lubrification à l'huile ou à la graisse dans cet organe.

A cet effet, le dispositif de commande du pas collectif et du pas cyclique des pales d'un rotor de giravion, du type précité, se caractérise par le fait que le mécanisme d'articulation comprend au moins trois ensembles déformables lamifiés, répartis, de préférence régulièrement, autour de l'arbre et comportant chacun un empilement alterné de coupelles d'un matériau rigide et de couches du matériau élastique, lesdits ensembles déformables lamifiés étant solidaires, d'une part, de ladite armature externe circulaire et, d'autre part, de ladite bague formant une armature interne commune, et qui est montée coulissante le long d'un guide-plateau fixe, solidaire d'un carter rigidement lié à la structure du giravion, et en forme de cylindre de section circulaire monté coaxial autour d'une partie de l'arbre du rotor, afin de permettre la commande de pas collectif par translation d'ensemble le long du guide-plateaux. Dans une telle réalisation, il est clair que ces ensembles déformables lamifiés sont peu sollicités, puisqu'en fonctionnement ils travaillent en statique.

De plus, ce mécanisme d'articulation à base d'ensembles déformables lamifiés supprime tout risque de coincement de la commande au niveau des oscillations des plateaux par rapport à l'arbre du rotor.

Dans ce cas, le guide-plateaux comprend avantageusement deux coquilles hémi-cylindriques destinées à être assemblées l'une à l'autre autour de l'arbre du rotor, afin de permettre les montages et démontages du guide-plateaux sans démontage du mât rotor.

Le même avantage est obtenu pour les ensembles déformables lamifiés, si ces derniers, selon des caractéristiques propres à l'invention, comportent chacun une armature interne cintrée sensiblement en arc de cercle, les armatures internes s'assemblant les unes aux autres afin de constituer la bague commune montée coulissante sur le guide-plateaux. Chaque ensemble déformable lamifié peut ainsi être changé individuellement sans démontage du mât rotor.

De plus, chaque ensemble déformable lamifié est avantageusement un plot lamifié en forme de portion de sphère, dont les coupelles de matériau rigide et les couches de matériau élastique sont des portions de calotte sphérique dont le centre commun est le centre d'oscillations général des plateaux, car de tels plots lamifiés apportent en plus un positionnement radial suffisamment précis des plateaux, tout en offrant d'une part, une grande souplesse vis-à-vis de la rotation angulaire des plateaux, par cisaillement des couches de matériau élastique, et, d'autre part, une grande raideur vis-à-vis des efforts radiaux repris par les plateaux, par compression des couches de matériau élastique, le nombre de ces couches pouvant aisément être ajusté afin d'obtenir un compromis satisfaisant entre cette souplesse et cette raideur. Comme chaque roulement de liaison des deux plateaux doit être monté autour de l'arbre, il présente un diamètre relativement grand, et, selon l'invention, la bague externe de ce ou ces roulements est raidie et constitue le plateau tournant. Cet aménagement de la bague externe, qui permet de l'utiliser comme plateau tournant, offre un meilleur cheminement des efforts de commande de pas entre les organes de commande, qui sont des servocommandes, et les bielles de pas, par rapport aux montages de l'état de la technique.

Dans cette configuration, le plateau non tournant, qui est un plateau radial interne par rapport au(x) roulement(s), se prolonge avantageusement radialement vers l'extérieur et axialement vers le carter de fixation du ou des organes de liaison inférieurs, par une jupe portant des chapes d'articulation aux organes de commande et au(x) organe(s) de liaison inférieur(s) afin de faciliter les liaisons de ce plateau d'une part à des servocommandes et d'autre part à au moins un compas fixe.

Enfin, des chapes d'articulation des bielles de pas et du ou des organes de liaison supérieurs sont rapportées séparément sur le plateau tournant, afin de simplifier leur montage et de permettre leur démontage éventuel sans démontage du mât rotor.

L'invention sera mieux comprise à l'aide d'un exemple particulier de réalisation, décrit ci-après à titre non limitatif, en référence aux dessins annexés, dans lesquels :

— les figures 1 et 2 représentent des vues essentiellement en coupe par un plan diamétral et partiellement en élévation latérale avec arrachement partiel d'un mât rotor d'hélicoptère équipé du dispositif de commande de pas conforme à l'invention, respectivement en positions de pas cycliques nul et non nul, et

— la figure 3 est une vue partiellement en plan et partiellement en coupe transversale avec arrachements de la figure 1.

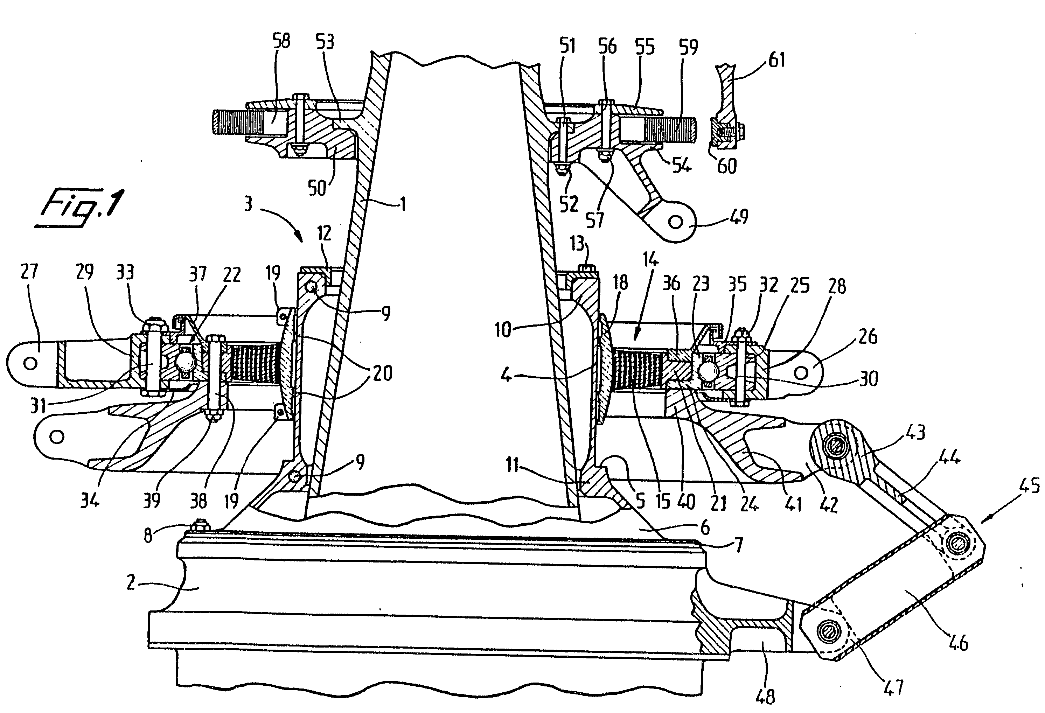

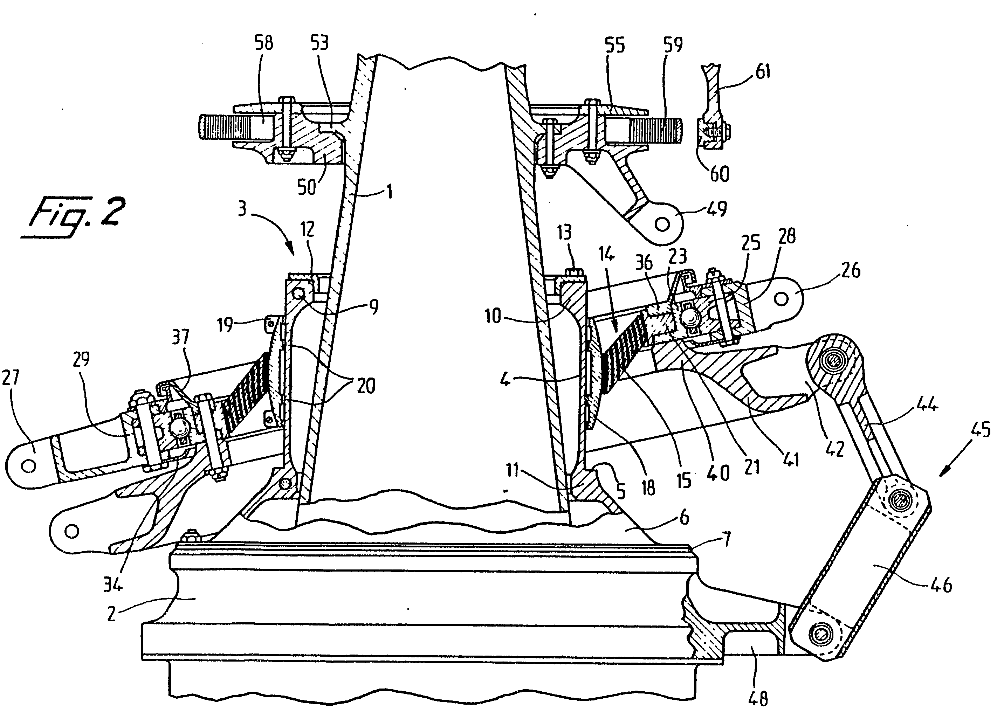

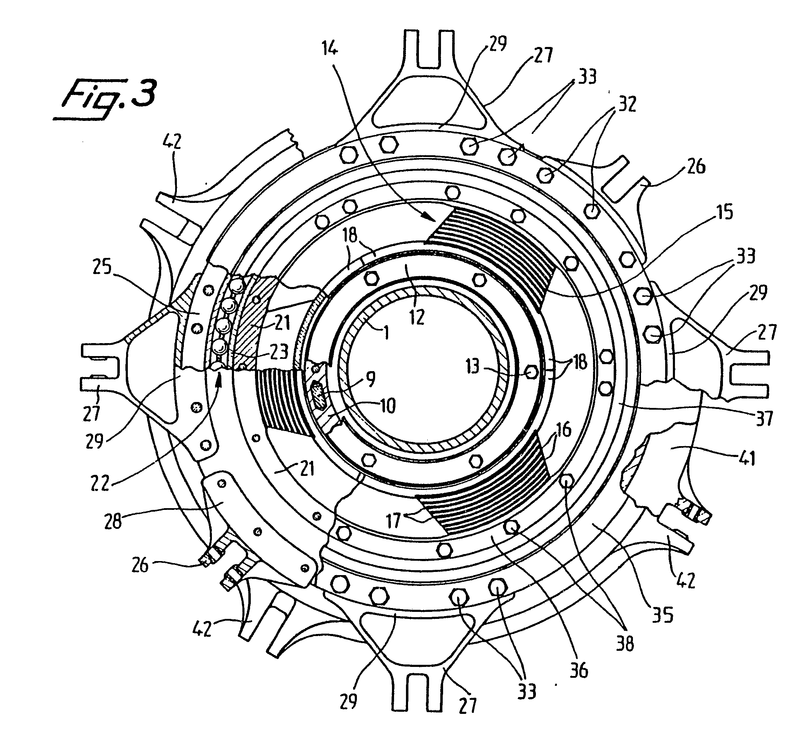

En référence aux figures 1 à 3, le mât rotor comprend un arbre tubulaire 1 ayant, dans cet exemple, une partie centrale tronconique, et qui est entraîné en rotation autour de son axe par sa partie inférieure (non représentée) en prise avec la boîte de transmission principale de l'hélicoptère. La liaison rigide de l'arbre 1 du rotor à la boîte de transmission principale est assurée à l'intérieur d'un carter 2 solidaire de la structure de l'hélicoptère, et l'arbre 1 est ancré dans le carter 2 par exemple par deux roulements coniques (non représentés) qui supportent en vol la portance du rotor et au sol le poids de ce dernier. Le rotor (également non représenté) est, de façon bien connue, solidaire de l'extrémité supérieure de l'arbre 1 par un moyeu auquel plusieurs pales sont reliées chacune par son emplanture équipée d'un levier de commande de l'incidence ou du pas de la pale correspondante. Autour de l'arbre 1 est monté un guide-plateaux 3 constitué de deux coquilles sensiblement symétriques qui s'assemblent l'une à l'autre par boulonnage dans un plan vertical et axial de l'arbre 1. Chaque coquille présente une partie hémi-cylindrique qui se prolonge à une extrémité axiale par une partie en demi-tronc de cône. De la sorte, lorsque les deux coquilles sont assemblées l'une à l'autre autour de l'arbre 1, le guide-plateaux 3 comprend un tronçon supérieur 4, ayant extérieurement la forme d'un tronc de cylindre de section circulaire, rattaché à sa base, qui présente un épaulement radial externe 5, à un tronçon inférieur tronconique 6, divergeant vers le carter 2. La grande base du tronçon tronconique 6 présente un collet radial externe 7 par lequel le guide-plateaux 3 est solidarisé et positionné sur le carter 2 au moyen d'une couronne de vis portées par le carter 2 et en saillie vers le haut, et qui s'engagent chacune dans un orifice percé dans le collet 7, un écrou tel que 8 sur les figures 1 et 2 étant vissé sur chaque vis afin de fixer rigidement le guide-plateaux 3 au carter 2. Lors de l'assemblage des deux coquilles, le centrage est assuré par des pions tels que 9 qui sont logés dans des évidements ménagés dans l'épaisseur des extrémités supérieure 10 et inférieure 11 surépaissies du tronçon supérieur 4, et une bague épaulée 12 est engagée sur les bords supérieur et interne de l'extrémité supérieure 10 et boulonnée sur cette dernière par une couronne de boulons tels que 13, afin d'assurer un bon positionnement de la partie supérieure du guide-plateaux 3 par rapport à l'arbre 1. Le carter 2 et le guide-plateaux 3 sont par exemple réalisés en alliage léger.

Autour du tronçon supérieur 4 du guide-plateaux 3 sont montés trois ensembles déformables lamifiés 14, identiques, non adjacents l'un à l'autre et régulièrement répartis autour du guide-plateaux 3. Chaque ensemble déformable lamifié 14 comprend un plot lamifié 15 constitué par un empilement alterné de coupelles 16 et d'un matériau rigide, par exemple de l'acier, et de couches 17 d'un matériau élastique par exemple un élastomère ou un caoutchouc. Les coupelles 16 et couches 17 ont chacune la forme d'une portion de calotte sphérique, la hauteur des portions (ou dimension de ces portions selon l'axe de l'arbre 1) et la largeur des portions (ou dimension circonférentielle de ces portions) étant progressivement croissantes de la couche 17 de l'extrémité radiale externe du plot 15 à la couche 17 de son extrémité radiale interne, et les coupelles 16 et couches 17 étant adhérisées ou vulcanisées alternativement les unes sur les autres de manière symétrique par rapport à un plan radial médian de chaque ensemble déformable lamifié 14. Le nombre des couches 17 et coupelles 16, ainsi que des lois de variation de leur hauteur et/ou de leur largeur, et également de leur épaisseur, d'une couche ou coupelle à l'autre, ainsi que sur une même coupelle ou couche, peuvent être choisis afin de donner au plot 15 des caractéristiques souhaitées de déformations élastiques en cisaillement et/ou compression. Le ou les rayons de courbure des portions de calotte sphérique est ou sont situés du côté de l'axe de l'arbre 1, et dans l'exemple représenté, les coupelles 16 et couches 17 ont un centre de courbure commun situé sur l'axe de l'arbre 1.

Par sa surface radiale interne et concave, la couche 17 de l'extrémité radiale interne du plot 15 est solidaire de la face radiale externe de forme convexe correspondante d'une armature interne rigide 18, par exemple en acier. Cette armature interne 18 est une portion en arc de cercle soutendu par un angle au centre de 120° d'une bague circulaire de surface externe en tronc de sphère et de surface interne cylindrique. A chacune de ses deux extrémités, l'armature 18 porte deux pattes radiales externes 19 par lesquelles les trois armatures 18 sont assemblées bout à bout par boulonnage, afin de reconstituer une bague interne montée coulissante autour du tronçon 4 du guide-plateaux 3, avec interposition de deux segments 20 autolubrifiants entre la surface interne cylindrique de la bague interne et la surface externe cylindrique du tronçon 4, afin de faciliter les translations des ensembles déformables lamifiés 14 le long du guide-plateaux 3.

Chaque ensemble déformable lamifié 14 comprend également une armature externe rigide 21, par exemple en acier, qui est une portion cintrée en arc de cercle sous-tendu par un angle au centre de 120° d'un tore de section transversale en T. Le plot 15 est solidarisé par la surface radiale externe de sa couche 17 d'extrémité radiale externe contre la surface radiale interne de cette armature externe 21. Par sa partie radiale externe, chacune des trois armatures externe 21 repose contre un collet inférieur radial interne 24 de la bague interne d'un roulement à billes de grand diamètre 22. La bague externe 25 de ce roulement 22 est de grande dimension et raidie, et elle présente une section en U ouverte vers l'extérieur. Sur cette bague externe 25 sont rapportées des petites chapes radiales 26 et des grandes chapes radiales 27, en saillie vers l'extérieur, qui sont réparties alternativement sur la périphérie de la bague 25 et chevauchent chacune cette dernière par une partie radiale interne fourchue 28 ou 29 respectivement, par laquelle la chape correspondante 26 ou 27 est boulonnée sur la bague externe 25 par des boulons 30 ou 31 et des écrous 32 ou 33 freinés ou goupillés. Les boulons 30 et 31 traversent des perçages alignés ménagés non seulement dans la bague externe 25 et dans les fourches 28 ou 29 respectivement, mais également dans un flasque 34 de retenue de graisse et de protection du roulement 22, en forme de couronne à bord interne légèrement rabattu vers le haut et appliquée par les têtes des boulons 30 et 31 contre la face inférieure de la bague externe 25 du roulement 22.

A la partie supérieure du roulement 22 est installé un dispositif de retenue de graisse et de protection du roulement contre les infiltrations d'eau constitué d'une part par une première couronne 35 dont un collet radial externe est appliqué par les écrous 32 et 33 contre la face supérieure de la bague externe 25 tandis que sa partie centrale en saillie vers le bas assure son centrage sur la bague externe 25 et que sa partie radiale interne est en saillie vers le haut et légèrement rabattue vers l'extérieur à son extrémité supérieure et d'autre part par une seconde couronne 36 appliquée sur la partie radiale externe des armatures externes 21 des ensembles déformables lamifiés 14 et constituée par une jupe 37 en saillie vers le haut et radialement vers l'extérieur et à l'extrémité externe rabattue vers le bas pour venir recouvrir la partie radiale interne de la première couronne de manière à former un joint labyrinthe de protection du roulement 22.

Cette seconde couronne 36 et la partie radiale externe des armatures externes 21 des ensembles déformables lamifiés 14 sont fixées sur le collet inférieur interne de la bague interne 23 du roulement 22 par une couronne de boulons 38 et d'écrous 39 freinés et goupillés par lesquels un anneau 40 est simultanément fixé contre la face inférieure de la bague interne 23 du roulement 22. Cet anneau 40 se prolonge radialement vers l'extérieur et vers le bas par une jupe 41 qui porte deux volants en saillie radiale vers l'extérieur et l'un au-dessus de l'autre, ces volants étant conformés en quatre chapes 42 décalées à 90° sur la périphérie de la jupe 41.

Sur l'une de ces chapes 42, à joues parallèles à l'axe de l'arbre 1, est articulé, par des paliers autolubrifiants, un embout à rotule 43 de l'extrémité libre de la branche supérieure 44 d'un compas 45, dont la branche inférieure 46 est articulée par un double palier cylindrique autolubrifiant 47 sur une double chape 48 latérale du carter 2, tandis que les trois autres chapes 42 sont chacunes articulée, également par des paliers autolubrifiants, sur un embout à rotule de l'extrémité supérieure d'un vérin de servocommande (non représenté), dont l'embout rotulé de l'extrémité inférieure est articulé sur un élément de la structure de l'hélicoptère. De manière analogue, chacune des petites chapes 26 portées par la bague externe 25 du roulement 22 est articulée par des paliers autolubrifiants sur un embout rotulé de l'extrémité libre de la branche inférieure d'un compas (non représentée) semblable au compas 25, et dont la branche supérieure est articulée par un double palier cylindrique autolubrifiant sur l'une des chapes radiales 49, en saillie vers le bas, d'un entraîneur de compas 50 fixé par des boulons tels que 51 et des écrous tels que 52 sur un collet radial externe 53 de l'arbre 1. Chacune des grandes chapes 27 portées sur la bague externe 25 du roulement 22 est liée par une rotule à l'embout de l'extrémité inférieure d'une bielle de pas (non représentée) de longueur réglable et dont l'embout rotulé de l'extrémité supérieure est articulé sur le levier de commande du pas ou de l'incidence de l'une des pales du rotor.

On réalise ainsi un dispositif de commande du pas des pales du rotor, dans lequel l'anneau 40 et sa jupe 41 constituent le plateau non tournant, immobilisé en rotation par rapport à l'arbre 1 par le compas fixe 45, qui le relie au carter fixe 2, et qui est également relié par les chapes 42 à des servocommandes. Ce plateau non tournant 40-41 est solidarisé aux armatures externes 21 des trois ensembles déformables lamifiés 14, montés coulissants par leurs armatures internes 18 le long du guide-plateaux 3, et à la bague interne 23 du roulement 22, dont la bague externe 25 fait office de plateau tournant, entraîné en rotation avec l'arbre 1 par les compas tournants reliant les chapes 26 aux chapes 49 de l'entraîneur de compas 50, et ce plateau tournant 25 est également relié aux leviers de commande du pas des pales par des bielles de pas articulés sur les chapes 27.

Ainsi, une action simultanée et égale, exercée dans le même sens par les servocommandes sur le plateau non tournant 40-41, entraîne l'ensemble constitué par les deux plateaux 40-41 et 25, le roulement 22 et les ensembles déformables lamifiés 14 en translation le long du guide-plateaux 3. Ce mouvement coulissant est transmis, par traction ou poussée sur les bielles de pas, simultanément à tous les leviers de commande de pas, de sorte qu'il permet de commander le pas collectif des pales. Par contre, une action différentielle des servocommandes entraîne, par déformation en cisaillement des couches élastiques 17 des plots lamifiés 15, l'inclinaison d'ensemble des deux plateaux 40-41 et 25, et du roulement 22 avec les armatures externes 21 des ensembles déformables lamifiés 14, comme cela est représenté sur la figure 2, alors que les armatures internes 18 ne bougent pas, ce qui correspond au passage d'un pas cyclique transmis par les bielles de pas aux leviers de commande du pas des pales.

Dans cet exemple, on peut avantageusement utiliser un collet radial externe et inférieur 54 de l'entraîneur 50 des compas tournants pour délimiter, avec une couronne 55 fixée sur cet entraîneur 50 par des boulons 56 et des écrous 57, une gorge 58 de logement d'un anneau réciproque 59 coopérant avec des butées basses telles que 60, dont chacune est par exemple en saillie sous le levier de commande de pas 61 de la pale correspondante, afin de limiter l'inclinaison vers le bas de la pale à l'arrêt et aux faibles vitesses de rotation du rotor.

On comprend qu'avec un tel dispositif il soit possible de procéder au remplacement individuel de toutes les pièces constitutives susceptibles d'usure, à l'exception du roulement 22, sans avoir à démonter le mât rotor, ce qui est un avantage très important. L'utilisation de la bague externe du roulement comme plateau tournant permet une réalisation économique et légère de cet organe entre les servocommandes et les bielles de pas. Enfin, les plots lamifiés 15 assurent un bon positionnement radial des plateaux autour de l'arbre.

## Revendications

1. Dispositif de commande du pas collectif et du pas cyclique des pales d'un rotor de giravion du type comprenant deux plateaux annulaires (40-41, 25) destinés à être assemblés par au moins un roulement à billes (22) et montés concentriques autour de l'arbre (1) du rotor, et dont l'un est un plateau non tournant (40-41), immobilisé en rotation par au moins un organe de liaison inférieur (45) fixé à au moins un carter (2) rigidement lié à la structure du giravion, et monté, d'une part, déplaçable le long de l'arbre (1) du rotor, et, d'autre part, oscillant par rapport à l'arbre (1) du rotor par l'intermédiaire d'un mécanisme d'articulation (14), tandis que l'autre est un plateau tournant (25) destiné à être entraîné en rotation avec l'arbre (1) du rotor par au moins un organe de liaison supérieur fixé à l'arbre (1) et/ou au moyen du rotor, et relié au levier de commande du pas de chacune des pales du rotor par une bielle de pas, le plateau non tournant (40-41) étant sollicité par des organes de commande du pas collectif, qui commandent ses déplacements le long de l'arbre (1), ainsi que par des organes de commande du pas cyclique, qui commandent ses oscillations par rapport à l'arbre (1), lesdites oscillations étant autorisées par déformation en cisaillement, dans le mécanisme d'articulation (14), d'un matériau élastique monté entre une armature interne en forme de baque (18) et une armature externe circulaire (21), qui est assemblée à la bague interne (23) du ou des roulements à billes (22) reliant les deux plateaux (40-41, 25) de sorte que le plateau tournant (25), qui suit les mouvements du plateau non tournant (40-41) transmet ces mouvements aux leviers de commande de pas par l'intermédiaire des bielles de pas, caractérisé par le fait que le mécanisme d'articulation comprend au moins trois ensembles déformables lamifiés (14) répartis autour de l'arbre (1), et comportant chacun un empilement alterné de coupelles (16) d'un matériau rigide et de couches (17) du matériau élastique, lesdits ensembles déformables lamifiés (14) étant solidaires, d'une part, de ladite armature externe circulaire (21), et d'autre part, de ladite bague (18) formant une armature interne commune, et qui est montée coulissante le long d'un guide-plateaux (3) fixe, solidaire d'un carter (2) rigidement lié à la structure du giravion, et disposé en forme de cylindre (4) de section circulaire monté coaxial autour d'une partie de l'arbre (1) du rotor.

2. Dispositif selon la revendication 1, caractérisé par le fait que le guide-plateaux (3) fixe comprend deux coquilles hémi-cylindriques destinées à être assemblées l'une à l'autre autour de l'arbre (1) du rotor.

3. Dispositif selon l'une des revendications 1 et 2, caractérisé par le fait que chaque ensemble déformable lamifié (14) comporte une armature interne (18), cintrée sensiblement en arc de cercle, les armatures internes (18) s'assemblant les unes aux autres afin de constituer la bague commune, montée coulissante sur le guide-plateaux (3).

4. Dispositif selon l'une des revendications 1 à 3, caractérisé par le fait que chaque ensemble déformable lamifié (14) comprend un plot lamifié (15) en forme de portion de sphère, dont les coupelles (16) de matériau rigide et les couches (17) de matériau élastique sont des portions de calottes sphériques dont le centre commun est le centre d'oscillation général des plateaux (40-41, 25).

5. Dispositif selon l'une des revendications 1 à 4, caractérisé par le fait que le plateau tournant (25) est constitué par la bague externe du ou des roulements à billes (22) reliant les deux plateaux (40-41, 25).

6. Dispositif selon l'une des revendications 1 à 5, caractérisé par le fait que le plateau non tournant (40-41) est un plateau radial interne par rapport au(x) roulement(s) et qui se prolonge radialement vers l'extérieur et axialement vers le carter (2) de fixation du ou des organes de liaison inférieurs (45) par une jupe (41) portant des chapes (42) d'articulation aux organes de commande et au(x) oragne(s) de liaison inférieur(s).

7. Dispositif selon l'une des revendications 1 à 6, caractérisé par le fait que des chapes d'articulation (26, 27) des bielles de pas et du ou des organes de liaison supérieur(s) sont rapportées séparément sur le plateau tournant (25).

## Claims

1. Control arrangement for the collective and cyclic pitch of the blades of a rotor of a rotorcraft, of the type comprising two annular plates (40-41, 25) designed to be assembled by at least one ball bearing (22) mounted concentrically around the shaft (1) of the rotor, and in which one is a non-turning plate (40-41) immobilised in rotational sense by at least one lower linking element (45) fixed to at least a frame (2) rigidly connected to the structure of the rotorcraft and mounted on the one hand displaceably along the shaft (1) of the rotor, and on the other hand, oscillating with respect to the shaft (1) of the rotor via the agency of a joint mechanism (14) while the other is a rotating plate (25) designed to be connected in rotation with the shaft (1) of the rotor by at least one upper linking element fixed to the shaft (1) and/or by means of the rotor, and connected to the pitch control lever of each of the rotor blades via a pitch connecting rod, the non-turning plate (40-41) being subjected to control elements for the collective pitch which control its displacement along the shaft (1) while by control elements for the cyclic pitch which control its oscillation with respect to the shaft (1), said oscillations being enabled by deformation in shear, in the joint mechanism (14), of an elastic material mounted between an internal armature in the form of a ring (18) and an external circular armature (21) which is connected to the inner ring (23) of the ball bearing (22) linking the two plates (40-41, 25) in such fashion that the rotating plate (25) which follows the movements of the non-rotating plate (40-41) transmits these movements to the pitch control levers via the intermediate pitch connecting rod, characterised by the fact that the joint mechanism comprises at least three laminated deformable assemblies (14) spread out around the shaft (1) and each comprising an alternating stack of little cups (16) of a rigid material and layers (17) of an elastic material, the said laminated deformable assemblies (14) being fixed, on the one hand to the said external circular armature (21), and on the other hand, to the said ring (18) forming a common internal armature, and which is slidably mounted along a fixed guide plate (3) fixed to a frame (2) rigidly bonded to the structure of the rotorcraft, and arranged in the form of a cylinder (4) of circular section mounted co-axially around a part of the shaft (1) of the rotor.

2. Arrangement according to claim 1, characterised by the fact that the fixed guide plate (3) comprises two semi-cylindrical shells designed to be assembled one to another around the shaft (1) of the rotor.

3. Arrangement according to one of claims 1 and 2, characterised by the fact that each laminated deformable assembly (14) comprises an internal armature (18) substantially curved in a circular arc, the internal armatures (18) assembling one with the others with the object of forming the common ring slidably mounted on the guide plate (3).

4. Arrangement according to one of claims 1 to 3, characterised by the fact that each laminated deformable assembly (14) comprises a laminated slab (15) in the form of a portion of a sphere, of which the little cups of rigid material (16) and the layers (17) of elastic material are portions of spherical segments, of which the common centre is the centre of general oscillation of the plates (40-41, 25).

5. Arrangement according to one of claims 1 to 4, characterised by the fact that the rotating plate 25 is constituted by the external ring of the or each ball bearing (22) connecting the two plates (40-41, 25).

6. Arrangement according to one of claims 1 to 5, characterised by the fact that the non-turning plate (40-41) is a plate radially inwardly with respect to the rolling(s) and which is extended radially towards the outside and axially towards the frame (2) on which are fixed the lower linking elements (45) by a skirt (41) carrying pivoting forks (42) for the control elements and the lower linking element(s).

7. Arrangement according to one of claims 1 to 6, characterised by the fact that one of the forks (26, 27) of the pitch connecting rods and the or each upper linking element are connected separately on the rotating plate (25).

**Patentansprüche**

1. Betätigungsvorrichtung für ein kollektives oder zyklisches Einstellen der Rotorblätter eines Drehflügelflugzeuges, mit zwei Ringscheiben (40-41, 25), die für eine Verbindung durch mindestens ein Kugellager (22) vorgesehen und konzentrisch um die Welle (1) des Rotors montiert sind, von denen die eine eine nicht drehbare Scheibe (40-41) ist, die hinsichtlich einer Rotation durch mindestens ein unteres Verbindungsorgan (45) unbeweglich ist, das mindestens an ein Gehäuse (2) befestigt ist, das mit dem Aufbau des Drehflügelflugzeuges starr verbunden ist, sowie einerseits längs der Welle (1) des Rotors verschiebbar und andererseits bezüglich der Welle (1) des Rotors mittels eines Gelenkmechanismus (14) schwingt, und von denen die andere eine drehbare Scheibe (25) ist, die dazu vorgesehen ist, durch mindestens ein oberes Verbindungsorgan mit der Welle (1) des Rotors gedreht zu werden, wobei dieses obere Verbindungsorgan an der Welle (1) und/oder mittels des Rotors befestigt ist, und die drehbare Scheibe (25) mit dem Betätigungshebel für das Einstellen eines jeden der Rotorblätter durch eine Einstellschubstange verbunden ist, wobei die nicht drehbare Scheibe (40-41) betätigt wird durch Betätigungsorgane für das kollektive Einstellen, welche ihre Verschiebungen entlang der Welle (1) vornehmen, sowie durch Betätigungsorgane für das zyklische Einstellen, die ihre Schwingungen bezüglich der Welle (1) vornehmen, wobei die genannten Schwingungen durch ein Deformieren unter Schwerkraft ermöglicht werden, und wobei in dem Gelenkmechanismus (14) ein elastisches Material zwischen einer inneren Armatur in Form eines Rings (18) und einer äußeren ringförmigen Armatur (21) befestigt ist, das an dem Innenring (23) des Kugellagers (22) oder der Kugellager (22) zusammengesetzt ist, welches oder welche die zwei Scheiben (40-41, 25) derart miteinander verbindet, daß die drehbare Scheibe (25), die den Bewegungen der nicht drehbaren Scheibe (40-41) folgt, diese Bewegungen mittels der Einstellschubstangen auf die Betätigungshebel für das Einstellen überträgt, dadurch gekennzeichnet, daß der Gelenkmechanismus mindestens drei deformierbare laminierte Anordnungen (14) aufweist, die um die welle (1) gleichmäßig verteilt sind und von denen jede einen Stapel aus abwechselnd Schalen (16) aus einem starren Material und Schichten (17) aus einem elastischen Material umfaßt, wobei die genannten deformierbaren laminierten Anordnungen (14) einerseits mit der genannten externen kreisförmigen Armatur (21) und andererseits mit dem genannten Ring (18), der eine gemeinsame innere Armatur bildet, fest verbunden sind, die entlang einer feststehenden Führungsscheibe (3) zusammenschiebbar montiert ist, die mit einem Gehäuse (2) fest verbunden ist, das an dem Aufbau des Drehflügelflugzeugs starr befestigt und in Form eines Zylinders (4) mit kreisförmigem Querschnitt angeordnet ist, der koaxial um einen Teil der Welle (1) des Rotors montiert ist.

2. Vorrichtung nach Anspruch 1, dadurch gekennzeichnet, daß die feststehende Führungsscheibe (3) zwei halbzylindrische Schalen aufweist, die dazu vorgesehen sind, daß die eine an die andere um die Welle (1) des Rotors herum angeordnet wird.

3. Vorrichtung nach einem der Ansprüche 1 und 2, dadurch gekennzeichnet, daß jede der deformierbaren laminierten Anordnungen (14) eine innere Armatur (18) aufweist, die merklich in einem Kreisbogen gekrümmt ist, wobei sich von den inneren Armaturen (18) eine an die andere anordnet, um einen gemeinsamen Ring zu bilden, der über der Führungsscheibe (3) zusammenschiebbar montiert ist.

4. Vorrichtung nach einem der Ansprüche 1 bis 3, dadurch gekennzeichnet, daß jede der deformierbaren laminierten Anordnungen (14) einen laminierten Block (15) in Form eines Kugelabschnittes aufweist, wo die Schalen (16) des starren Materials und die Schichten (17) des elastischen Materials kugelkalottenförmige Abschnitte darstellen, in deren gemeinsamen Zentrum sich das allgemeine Schwingungszentrum der Scheiben (40-41, 25) befindet.

5. Vorrichtung nach einem der Ansprüche 1 bis 4, dadurch gekennzeichnet, daß die drehbare Scheibe (25) aus einem Außenring des Kugellagers (22) oder der Kugellager (22) besteht, welches oder welche die zwei Scheiben (40-41, 25) verbindet oder verbinden.

6. Vorrichtung nach einem der Ansprüche 1 bis 5, dadurch gekennzeichnet, daß die nicht drehbare Scheibe (40-41) bezüglich des Kugellagers oder der Kugellager eine radiale innere Scheibe ist und sich radial nach außen und axial zu sem Gehäuse (2) verlängert mit einer Befestigung aus einem unteren Verbindungsorgan (45) oder unteren Verbindungsorganen (45) durch einen Vorsprung (41), der Gabelgelenke (42) mit Betätigungsorganen und einem unteren Verbindungsorgan oder unteren Verbindungsorganen trägt.

7. Vorrichtung nach einem der Ansprüche 1 bis 6, dadurch gekennzeichnet, daß Gabelgelenke (26, 27) für Einstellschubstangen und ein oberes Verbindungsorgan oder obere Verbindungsorgane über der drehbaren Scheibe (25) getrennt angesetzt sind.

**Fig.1**

*Fig. 2*

Fig.3